# EUROPÄISCHE PATENTSCHRIFT

(11) **EP 3 587 294 B1**
(45) Veröffentlichungstag und Bekanntmachung des Hinweises auf die Patenterteilung: **23.12.2020**
(21) Anmeldenummer: 18180528.4
(22) Anmeldetag: 28.06.2018
(51) Int. Cl.: B65D 6/18, B65D 21/02, B65D 25/28, F16B 21/08

(54) **STAPELBARER BEHÄLTER MIT VERBINDUNGSMECHANISMUS**
STACKABLE CONTAINER WITH CONNECTION MECHANISM
RÉCIPIENT EMPILABLE POURVU DE MÉCANISME DE RACCORDEMENT

(43) Veröffentlichungstag der Anmeldung: 01.01.2020
(73) Patentinhaber: Schoeller Allibert GmbH, 19057 Schwerin (DE)
(72) Erfinder: VOS, Theodoor Henk Vincent, 7881 RN Emmer-Compascuum (NL); PODHAJECKY, Torsten, 32427 Minden (DE); VAN DER KORPUT, Maximus Gerardus Maria, 7251 VJ Vorden (NL)
(74) Vertreter: Winter, Brandl, Fürniss, Hübner, Röss, Kaiser, Polte - Partnerschaft mbB

(56) Entgegenhaltungen:
- KR-U- 20080 005 332
- US-A- 5 918 743
- US-A1- 2004 159 659
- US-A1- 2008 121 547
- US-A1- 2009 165 262
- US-A1- 2011 084 083

## Beschreibung

### Technisches Gebiet

Die vorliegende Offenbarung betrifft einen stapelbaren Behälter bzw. ein Behältersystem aus stapelbaren Behältern mit einem Verbindungsmechanismus, und eine Verwendung eines Verbindungselementes zum Verbinden von zwei übereinander gestapelten Behältern.

### Stand der Technik

Aus dem Stand der Technik sind modulare Behälterkonzepte bekannt, bei denen tragbare Behälter stapelbar und mittels Verriegelungseinrichtungen bzw. einem Verbindungsmechanismus an den Seitenwänden miteinander arretierbar sind. Auf diese Weise können beliebig viele derartige Behälter übereinandergestapelt werden. Derartige Behälter dienen zum Transport oder zur Lagerung von Waren.

Ein derartiger Verbindungsmechanismus zur Arretierung aufeinander gestapelter Behälter ist beispielsweise aus EP 2 189 381 B1 oder aus EP 2 402 259 B1 bekannt. Der Verbindungsmechanismus besteht einerseits aus komplementären Rastflächen und andererseits aus einer federvorgespannten Verriegelungsklinke und einer dazu komplementären Verriegelungsnut an der Ober- bzw. Unterkante zweier gegenüberliegender Behälterseitenwände. Die Verbindungselemente bzw. Verriegelungselemente befinden sich somit unlösbar am Behälter und sind kippbar oder schwenkbar ausgebildet.

Darüber hinaus bezieht sich US 5 918 743 auf einen stapelbaren Behälter, der im gestapelten Zustand über einen Clip mit einem baugleichen Behälter verbindbar ist.

US 2008/0121547 A1 offenbart einen stapelbaren Behälter gemäß dem Oberbegriff des Anspruchs 1, der im gestapelten Zustand mit einem baugleichen Behälter unter Verwendung von Verbindungselementen verbindbar ist, welche in eine im Behälter befindliche Aussparung einbringbar sind.

KR 2008 0005332 A zeigt ein Gelenk, welches separat von einer Plastik-Hülle/CD-Hülle ausgebildet ist und dazu vorgesehen ist, mit einer Führung an der CD-Hülle zusammenzuwirken, um zumindest zwei derartige CD-Hüllen miteinander gelenkartig verbinden zu können.

US 2004/0159659 A1 offenbart einen Behälter mit vier relativ zum Boden einzeln klappbaren Seitenwänden. Zwei derartige Behälter sind über eine an ihrer Unter- und Oberseite vorgesehen Stapelgeometrie aufeinander stapelbar.

Außerdem ist aus US 2011/0084083 A1 ein Behälter bekannt, dessen Seitenwandpaare über Rastelemente zusammenhalten.

Derartige, mit dem Behälter fest verbundene Verbindungselemente bzw. Verbindungsmechanismen können nur unter einem zwangsläufigen Gebrauch des Verbindungsmechanismus gestapelt werden. Allerdings kann es sein, dass eine feste Verbindung der Behälter untereinander nicht bei jeder Stapelung notwendig oder erwünscht ist. In einem solchen Fall müssen die Verriegelungen der Behälter mit einem derartigen Verbindungsmechanismus erst zeitaufwändig voneinander gelöst werden und können anschließend nicht mehr ordnungsgemäß aufeinander gestapelt werden, da sonst wieder die Verriegelung zwischen den Behältern in Kraft treten würde.

Eine ordnungsgemäße Stapelung ist eine Stapelung von zumindest zwei baugleichen Behältern in der dafür vorgesehenen Ausrichtung der Behälter zueinander, wobei eine dafür eventuell vorhandene Stapelgeometrie eines unteren und eines oberen Behälters zusammenwirken können.

Es ist daher die Aufgabe der Erfindung, einen Verbindungsmechanismus für einen Behälter vorzusehen, der eine ordnungsgemäße Stapelung dieser Behälter ermöglicht, die wahlweise in einem Stapelzustand fest miteinander verbunden bzw. verriegelt werden können und andernfalls in jedem Fall ordnungsgemäß aufeinander gestapelt werden können, auch wenn keine feste Verbindung bzw. Verriegelung der gestapelten Behälter erwünscht ist.

### Zusammenfassung der Erfindung

Die vorstehend beschriebene Aufgabe wird durch einen stapelbaren Behälter gemäß dem unabhängigen Patentanspruch 1 sowie durch ein Behältersystem gemäß dem Patentanspruch 12 und eine Verwendung eines Verbindungselementes gemäß dem Anspruch 13 gelöst. Vorteilhafte Weiterbildungen der Erfindung sind Gegenstand der Unteransprüche.

Zur Lösung der oben beschriebenen Aufgabe ist daher ein erfindungsgemäßer stapelbarer Behälter vorgesehen, der einen Boden, zwei gegenüberliegende Stirnwände und zwei gegenüberliegende Seitenwände sowie einen Verbindungsmechanismus aufweist. Der Verbindungsmechanismus dient zum Verbinden zweier baugleicher und aufeinander gestapelter Behälter. Dabei weist der erfindungsgemäße Verbindungsmechanismus ein separat von dem Behälter ausgebildetes Verbindungselement auf, das entlang bzw. in einer am Behälter vorgesehenen Führung verschieblich einsetzbar oder verschieblich aufgenommen ist und einen, insbesondere integralen, Schnapphaken aufweist. Der Behälter bzw. dessen Verbindungsmechanismus weist zudem einen Verrastungsabschnitt auf, sodass der Schnapphaken des Verbindungselements mit dem dafür vorgesehenen Verrastungsabschnitt eines baugleichen Behälters in Eingriff bringbar ist.

In anderen Worten ist es erfindungsgemäß vorgesehen, dass ein Behälter, der einen Boden, ein Seitenwandpaar und ein Stirnwandpaar sowie einen Verbindungsmechanismus aufweist, über den Verbindungsmechanismus mit einem anderen baugleichen Behälter bei einer Stapelung fest verbindbar bzw. verriegelbar ist. Dazu weist der Verbindungsmechanismus ein vom Behälter unabhängig bzw. getrennt davon ausgebildetes Verbindungselement auf, das einen Haken aufweist, um mit einem Verrastungsabschnitt am Behälter, insbesondere schnappartig, verrastbar zu sein. Das Verbindungselement ist in einer, insbesondere nutförmigen, Führung am Behälter verschiebbar. So kann bei einem Stapel aus zumindest zwei baugleichen Behältern das Verbindungselement zum Arretieren der gestapelten Behälter entlang der Führung des einen Behälters von einer ersten, entriegelten Position in eine zweite Position verlagert werden, in welcher das Verbindungselement mit dem Verrastungsabschnitt des anderen Behälters einen verriegelnden Eingriff ausbildet.

Ein derartiger erfindungsgemäßer Verbindungsmechanismus erlaubt eine ordnungsgemäße Stapelung zweier baugleicher Behälter auch dann, wenn keine Verriegelung zwischen den gestapelten Behältern erwünscht ist. Falls keine Verriegelung oder Verbindung zwischen gestapelten Behältern erwünscht ist, kann das Verbindungselement einfach in der ersten Position belassen werden oder sogar aus der Führung geschoben bzw. entfernt werden und beeinträchtigt die Stapelung nicht. Ist eine sichere Verbindung des Stapels erforderlich, können die Verbindungselemente mit wenigen Handgriffen in die zweite Position verlagert werden. Somit sind die Behälter unabhängig von dem Verbindungsmechanismus in ihrer für die Stapelung vorgesehenen Ausrichtung bzw. Position stapelbar.

Erfindungsgemäß ist die Führung als Nut bzw. als längliche, gerade verlaufende Vertiefung ausgebildet, die in einer Außenfläche des Behälters, insbesondere am Boden bzw. an einem (seitlichen) Rand des Bodens, senkrecht zum Boden über die gesamte Bodenhöhe verläuft und die insbesondere parallel zu ihrer Längsrichtung an beiden Seiten zumindest eine Gleitvertiefung und/oder auf ihrer Grundfläche zumindest eine Gleitschiene zur unterstützenden bzw. zusätzlichen Führung des Verbindungselements aufweist. Dabei kann die Nut von der Außenfläche des Behälters aus betrachtet nach innen versetzt sein und vorzugsweise derart tief ausgebildet sein, dass die äußere Oberfläche des Verbindungselementes in der Ebene einer Außenfläche der Behälterwand liegt.

Durch die Ausbildung der Führung als Nut, steht sie vorteilhafterweise nicht aus der Außenfläche der Behälterwand heraus, was beispielsweise bei einem Führungsvorsprung der Fall wäre. Ein derartiger aus der Behälterebene herausstehender Vorsprung verschlechtert beispielsweise die Handhabbarkeit des Behälters und kann ein Verletzungsrisiko darstellen.

In einer bevorzugten Ausführungsform bildet der Verbindungsmechanismus behälterseitig einen Anschlag aus, der die Verschiebbarkeit des Verbindungselements in der Führung zum Verrastungsabschnitt eines unteren baugleichen Behälters hin begrenzt.

Der Vorteil besteht hierin, dass der Anschlag verhindert, dass das Verbindungselement vollständig in die Führung eines unteren baugleichen Behälters rutscht bzw. aus seiner Führung herausrutscht. Der Anschlag als Teil des Verbindungsmechanismus trägt darüber hinaus zu einer Verrieglung bzw. Verbindung oder Arretierung zweier gestapelter baugleicher Behälter bei, indem er einen entgegengesetzt zum Eingriff des Schnapphakens mit dem Verrastungsabschnitt wirkenden Formschluss ausbildet.

Weiter bevorzugt sind der Verrastungsabschnitt, der Anschlag und das Verbindungselement derart konstruktiv aufeinander abgestimmt, dass durch den Verbindungsmechanismus beim Verbinden zweier übereinandergestapelter baugleicher Behälter ein spielfreier Eingriff zwischen dem behälterseitigen Abschnitt des Verbindungsmechanismus und dem Verbindungselement als separatem Teil des Verbindungsmechanismus entsteht.

Durch diesen spielfreien Eingriff entsteht auch eine spielfreie Verbindung zwischen zwei aufeinander gestapelten Behältern, sodass die Behälter nicht gegeneinander verrutschen, eine sichere Stapelung möglich ist und somit auch mehrere Behälter sicher aufeinander gestapelt werden können.

Bei einer weiteren vorteilhafte Ausführungsform des Behälters sind beide Stirnwände und Seitenwände mit ihrer Unterseite über, vorzugsweise zumindest ein Gelenk oder Scharnier, klappbar mit dem Boden verbunden, sodass der Behälter von einem aufgebauten Zustand, in dem sich das Seitenwandpaar und das Stirnwandpaar vom Boden aus senkrecht erstrecken und somit eine umlaufende Seitenwandung des Behälter ausbilden, in einen zusammengengeklappten Zustand überführbar ist, in dem das Seitenwandpaar und das Stirnwandpaar zum Boden hin eingeklappt sind.

Durch die klappbare Verbindung der Seitenwandung am Boden kann ein aufgebauter Behälter schnell und werkzeuglos zusammengeklappt werden. Dies ist nützlich, wenn ein zuvor aufgebauter und beladener Behälter entleert ist und ohne Wareninhalt platzsparend transportiert werden soll. In diesem Fall können die jeweils gegenüberliegenden Seitenwände und Stirnwände einfach zum Boden hin eingeklappt und der leere Behälter platzsparend transportiert werden. Auch eine schnelle (Rück- )Überführung des Behälters von einem zusammengeklappten Zustand in einen aufgebauten Zustand ist möglich.

Vorzugsweise weisen die Stirnwände an ihrer Oberseite je ein Deckelelement zum Verschließen des aufgebauten Behälters auf, das verschwenkbar bzw. klappbar mit den Stirnwänden verbunden ist und in einem zusammengeklappten Zustand des Behälters auf die jeweilige Stirnwand auflegbar ist.

Ein derartiger Deckel, bestehend aus zwei Deckelelementen, dient im aufgebauten Behälterzustand vorteilhafterweise zum Schutz von Waren bzw. Transportgut, das sich im Inneren des Behälters befindet. Bei einem möglichen Kippen oder Umfallen des Behälters sichert der Deckel das Transportgut vor dem Entleeren und bietet allgemein einen Schutz vor Außeneinwirkung. Durch die zweiteilige Ausbildung kann bei Bedarf auch nur ein Deckelelement zur Abdeckung des Behälterinneren verwendet werden. Durch ihre erfindungsgemäße Anordnung an den Stirnwänden sind die Deckelelemente im zusammengeklappten Behälterzustand platzsparend verstaubar.

In einer weiteren bevorzugten Ausführungsform weisen zwei gegenüberliegende Behälterwände seitlich jeweils, insbesondere L-förmige, Eckabschnitte auf, die endseitig in Richtung der anderen Behälterwände ragen und Rastausnehmungen aufweisen, die in einem aufgebauten Zustand des Behälters seitlich vorgesehene Rasthaken der anderen Behälterwände aufnehmen.

Durch derartige komplementär zueinander ausgebildete Rastelemente können die Seitenwände rastbar und damit sicher mit den Stirnwänden verbunden werden. Damit ist der Behälter im aufgebauten Zustand stabil und ein ungewolltes Einklappen der Seitenwände oder Stirnwände wird durch die Rastwirkung der Rastelemente verhindert. Die Rastverbindung kann einfach und schnell, beispielsweise durch einfaches Ziehen an den Eckabschnitten, wieder gelöst werden, was die Zusammenklappbarkeit des Behälters beschleunigt und erleichtert.

Weiter bevorzugt weist der Boden unterseitig eine Stapelgeometrie auf, die bei einer Stapelung zweier baugleicher Behälter mit einer komplementären Stapelgeometrie an der Oberseite von zumindest einer Behälterwand zusammenwirkt.

Dies erlaubt vorteilhafterweise die ordnungsgemäße Stapelung zweier aufgebauter erfindungsgemäßer Behälter aufeinander sowie die Stapelung von einem zusammengeklappten Behälter auf einem aufgebauten Behälter.

Weiter bevorzugt ist die Stapelgeometrie auf Höhe der Führung ausgebildet und bildet zugleich den Anschlag aus.

Durch diese Mehrfunktionalität der Stapelgeometrie am Behälter mit den Funktionen zur Stapelung sowie als Anschlag ist keine separate Ausbildung von Abschnitten mit diesen Funktionen nötig, was die Herstellungskosten des Behälters verringert.

In einer weiteren Ausführungsform des Behälters weisen zwei gegenüberliegende Behälterwände an ihrer Außenfläche, vorzugsweise in der Nähe der Oberkante der Behälterwände angeordnete, griffartige Ausnehmungen auf.

Durch die Ausbildung von griffartigen, insbesondere bogenförmigen, Ausnehmungen, vorzugsweise in Form von Durchbrüchen, an zumindest zwei gegenüberliegenden Behälterwänden oder auch an allen Behälteraußenwänden ermöglicht den einfachen manuellen Transport der erfindungsgemäßen Behälter.

Ferner weist der Boden in einer weiter bevorzugten Ausführungsform des Behälters an zumindest zwei gegenüberliegenden Seiten einen (erhöhten) Bodenrand auf, der die zumindest eine Führung, vorzugsweise zwei Führungen, aufweist, die insbesondere über die gesamte Höhe des Bodenrands und/oder Bodens ausgebildet sind. Der Bodenrand erstreckt sich senkrecht zum Boden und kann vorzugsweise einstückig mit diesem ausgebildet sein. Bevorzugt kann der Bodenrand bei einem solchen Behälter in seiner Höhenerstreckung derart ausgelegt sein, dass er im zusammengengeklappten Zustand des Behälters bzw. der Behälterwände über die eingeklappten Behälterwände hinausragt oder zumindest mit diesen bündig abschließt, sodass Oberkante und Unterkante der Bodenränder zweier gestapelter baugleicher Behälter im zusammengeklappten Zustand aufeinander aufliegen können. Alternativ oder zusätzlich kann die Unterkante im Bereich des Bodenrands (und des Verbindungsmechanismus) auch nach unten, insbesondere kufenartig, überstehen sodass ein lichter Bereich an der Unterseite des Bodens entsteht, in welchem die eingeklappten Behälterwände eines darunter angeordneten baugleichen Behälters aufgenommen werden können. Vorteilhafter Weise können bei einem solchen Ausführungsbeispiel der Verrastungsabschnitt und/oder der Anschlag auf der Längsachse der Führung oder benachbart zu dieser angeordnet sein, insbesondere im Bereich der Ober- oder der Unterkante des Bodenrands.

Die Ausbildung des Bodenrands mit der Führung ermöglicht die Verbindung zweier gestapelter Behälter über den Verbindungsmechanismus auch im zusammengeklappten Zustand.

Weiter vorzugsweise ist das Verbindungselement in Form eines Schlittens oder Schieberiegels ausgebildet und weist an seiner Oberseite vorderseitig den Schnapphaken und hinterseitig einen Schiebeabschnitt auf, wobei vorzugsweise der Schiebeabschnitt an dem Anschlag anschlägt.

Durch die derartige einfache Ausbildung des Verbindungselements sind die Herstellungskosten für das Verbindungselement sowie dessen Schadensanfälligkeit gering.

In einer weiteren Ausführungsform bildet die Führung ein T-Profil aus und das Verbindungselement weist seitlich eine Gleitnase auf, die mit dem T-Profil der Führung zusammenwirkt.

Durch die Ausbildung der Führung mit einem T-Profil wird das Verbindungselement über seine dafür vorgesehenen Gleitnasen zusätzlich in Vertiefungen geführt, um ein Abrutschen des Verbindungselementes aus der Führung zu verhindern.

Erfindungsgemäß ist ein Behältersystem mit zumindest zwei verbindbaren erfindungsgemäßen Behältern vorgesehen.

Außerdem ist erfindungsgemäß eine Verwendung eines Verbindungselementes zum Verbinden von zwei übereinander gestapelten Behältern vorgesehen, das dazu konfiguriert ist, in eine Führung, die an einem Boden eines erfindungsgemäßen Behälters, insbesondere an einem Seitenrand des Bodens, vorgesehen ist, einsetzbar und darin verschiebbar sowie festlegbar zu sein, und ferner konfiguriert ist, über einen, insbesondere damit integral ausgebildeten, Schnapphaken mit einem Verrastungsabschnitt, der am Behälter vorgesehen ist, insbesondere spielfrei, in Eingriff bringbar zu sein.

In einer bevorzugten Ausführungsform ist das Verbindungselement mit einer rechteckigen Grundform ausgebildet und weist an seiner Oberseite vorderseitig den Schnapphaken und hinterseitig einen Schiebeabschnitt auf, der dazu dient, das Verbindungselement manuell führen zu können, und der vorzugsweise als Vorsprung ausgebildet ist und an einen Anschlag am Behälter anschlägt, und hat ein T-förmiges Querschnittprofil, das mit einem T-Profil der Führung zusammenwirkt.

Darüber hinaus wäre denkbar, dass die Führungen über die gesamte Behälterhöhe verlaufen, vor allem aber in einem oberen Abschnitt der Außenseite der Behälterwände, um eine Verbindung durch den erfindungsgemäßen Verbindungsmechanismus von einem Behälter auf einem aufgebauten Behälter zu ermöglichen.

Eine weitere denkbare Ausführungsform des Behälters wäre, dass die beiden Seitenwände oder die beiden Stirnwände nicht klappbar am Boden des Behälters befestigt sind, sondern steckbar mit dem Boden verbunden sind. In diesem Fall werden vor dem Zusammenklappen des Behälters die steckbaren Behälterwände entfernt, auf den Boden aufgelegt und schließlich die übrigen klappbaren Behälterwände, wie oben beschrieben, zum Boden hin eingeklappt.

Ein weiterer, unabhängig zu beanspruchender Aspekt der Erfindung betrifft einen klappbaren Behälter mit einem rechteckigen Bodenteil und vier separat dazu ausgebildeten Seitenwänden. Die Seitenwände sind klappbar mit dem Boden verbunden, sodass der Behälter von einem aufgebauten Zustand, in dem sich das Seitenwandpaar und das Stirnwandpaar vom Boden aus senkrecht erstrecken und somit eine umlaufende Seitenwandung des Behälter ausbilden, in einen zusammengengeklappten Zustand überführbar ist, in dem das Seitenwandpaar und das Stirnwandpaar zum Boden hin eingeklappt sind. Das Bodenteil weist an zumindest zwei gegenüberliegenden Seiten einen erhöhten Bodenrand auf, welcher im zusammengengeklappten Zustand des Behälters zumindest abschnittsweise über die eingeklappten Behälterwände hinausragt oder mit diesen bündig abschließt und an welchem ein Verbindungsmechanismus zum Verbinden gestapelter Behälter angeordnet ist. Der Verbindungsmechanismus ist derart ausgeführt, dass an der Unterkante des Bodenrands ein Verbindungselement angeordnet ist, welches dazu ausgebildet ist, einen verriegelnden Eingriff mit einem entsprechenden Verrastungsabschnitt an der Oberkante des Bodenrands eines baugleichen Behälters einzugehen oder umgekehrt.

Ein Behälter mit den vorstehend beschriebenen Merkmalen kann im zusammengeklappten Zustand mittels des Verbindungsmechanismus gestapelt und verriegelt werden.
Ein weiterer Aspekt der Erfindung betrifft ein System verbindbarer Behälter mit zumindest zwei Behältern nach einem der vorgenannten Aspekte, die mittels eines Verbindungsmechanismus im gestapelten Zustand miteinander verbindbar/arretierbar sind.

### Kurzbeschreibung der Figuren

Fig. 1 ist eine Perspektivansicht eines Behälters gemäß einer Ausführungsform der vorliegenden Offenbarung;
Fig. 2 ist eine Vorderansicht eines Bodens eines Behälters gemäß einer Ausführungsform der vorliegenden Offenbarung;
Fig. 3A ist eine Perspektivansicht einer Führung für einen Verbindungsmechanismus für einen Behälter;
Fig. 3B ist eine perspektivische Innenansicht eines Anschlags an einem Behälter;
Fig. 3C ist eine weitere Perspektivansicht einer Führung für einen Verbindungsmechanismus für einen Behälter;
Fig. 4A ist eine Perspektivansicht eines Verbindungselementes als Teil eines Verbindungsmechanismus;
Fig. 4B ist eine Seitenansicht eines Verbindungselementes als Teil eines Verbindungsmechanismus;
Fig. 4C ist eine Vorderansicht eines Verbindungselementes als Teil eines Verbindungsmechanismus;
Fig. 5A zeigt einen Zustand eines Verbindungselementes, in dem es sich ausschließlich in der Führung eines oberen Behälters befindet;
Fig. 5B zeigt einen Zustand, in dem ein Verbindungselement einen oberen und einen unteren Behälter miteinander verbindet;
Fig. 5C ist eine Schnittansicht entlang der Linie II-II in Fig. 5B;
Fig. 6 ist eine Perspektivansicht eines zusammengeklappten Behälters;
Fig. 7A ist eine Perspektivansicht einer Ecke eines Behälterbodens; und
Fig. 7B ist eine weitere Perspektivansicht einer Ecke eines Behälterbodens.

### Detaillierte Beschreibung der Ausführungsbeispiele

Im Folgenden sind Ausführungsformen des erfindungsgemäßen Behälters unter Bezug auf die beigefügten Zeichnungen im Detail beschrieben. Dabei werden gleichen Elementen dieselben Bezugszeichen zugewiesen. Die Ausführungsformen sind nur beispielhaft und die Erfindung ist nicht darauf begrenzt.

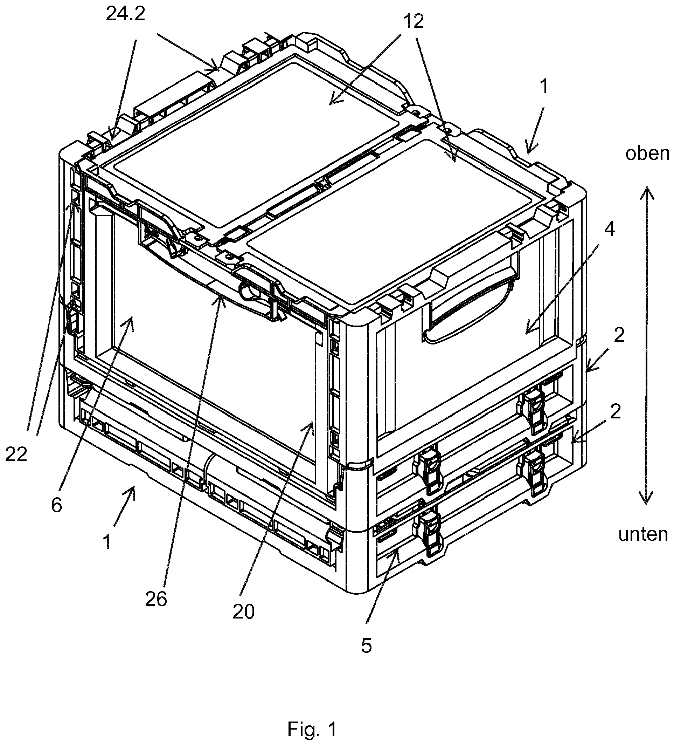

Fig. 1 zeigt die Perspektivansicht eines oberen Behälters 1 in einem aufgebauten Zustand, der auf einen unteren Behälter 1 im zusammengeklappten Zustand gestapelt ist. Der Behälter 1 weist einen Boden 2 mit zwei stirnseitigen Bodenrändern 3, zwei gegenüberliegende Stirnwände bzw. ein Stirnwandpaar 4, zwei gegenüberliegende Seitenwände bzw. ein Seitenwandpaar 6 und zwei Deckelelemente 12 auf. Die Stirn- und Seitenwände sind über ein Gelenk oder Scharnier (nicht dargestellt) mit dem Boden 2 verbunden. Die Deckelelemente 12 sind über ein Scharnier oder Gelenk (nicht dargestellt) klappbar mit der Oberkante der Stirnwände 4 verbunden, wobei sie aber in einer anderen Ausführungsform auch klappbar mit der Oberkante der Seitenwände 6 verbunden sein können. Die beiden Stirnwände 4 und die beiden Seitenwände 6 sind jeweils Behälterwände und bilden zusammen die umlaufende Seitenwandung des Behälters 1 aus. Gleichzeitig definieren sie über ihre Innenflächen die Behälterinnenseite und über ihre Außenflächen die Behälteraußenseite. Jede Behälterwand weist eine griffartige Ausnehmung 26 in Form eines Flächendurchbruchs auf. Über diese Ausnehmung 26 kann der Behälter 1 von einem Benutzer des Behälters 1 getragen werden. In beiden Behältern 1 sind pro Stirnseite je zwei Führungen 8 vorgesehen, die senkrecht zum Boden 2 verlaufen. In jeder Führung 8 befindet sich ein Verbindungselement 7, das mit einem leistenförmigen Verrastungsabschnitt 9 und einem bügelförmigen Anschlag 11 verrastbar ist. Der Verbindungsmechanismus 5 weist somit das Verbindungselement 7, eine Führung 8 für das Verbindungselement 7, den Verrastungsabschnitt 9 und den Anschlag 11 auf.

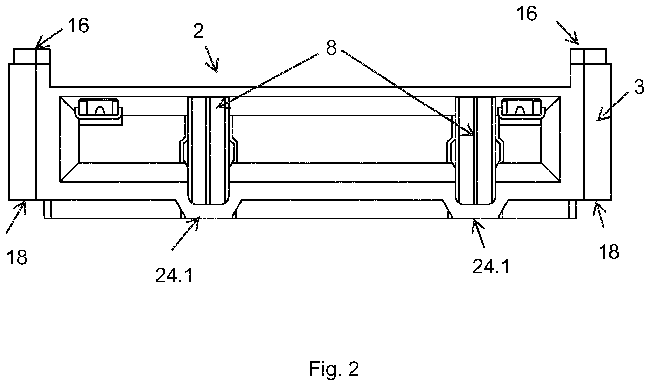

Fig. 2 ist die Vorderansicht des Bodens 2 des erfindungsgemäßen Behälters 1. Hier ist der Boden 2 mit Bodenrand 3 ausgebildet, in dem die zwei Führungen 8 senkrecht zum Boden 2 verlaufen und parallel zueinander sind. Der Boden 2 bzw. Bodenrand 3 weist seitlich je eine Ecke 14 mit einem Stapelvorsprung 16 auf. Die obere Kante der Ecken 14 verläuft oberhalb und parallel zur oberen Kante des Bodenrands 3. In dieser Ausführungsform verläuft die untere Kante des Bodenrands 3 oberhalb und parallel zur Unterseite des Bodens 2, sodass der Boden 2 einen nach unten ragenden Vorsprung ausbildet.

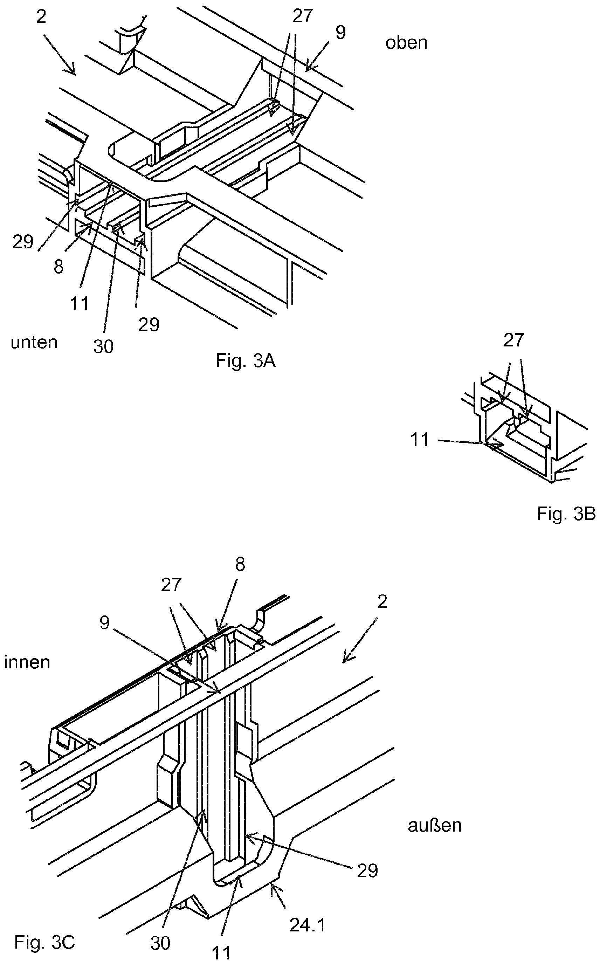

Fig. 3A zeigt die Perspektivansicht der Führung 8 bzw. die perspektivische Ansicht des Bodens 2 von schräg unten. Die Führung 8 ist dabei als Nut im Boden 2 bzw. im Bodenrand 3 ausgebildet. Die Führung 8 weist ein T-Profil auf, das seitlich seiner Grundfläche 27 je eine Gleitvertiefung 29 ausbildet und auf seiner Grundfläche 27 die Gleitschiene 30 ausbildet. Das untere Ende der Führung 8 wird durch den Anschlag 11 und das obere Ende der Führung 8 durch den Verrastungsabschnitt 9 überspannt.

Fig. 3B zeigt eine perspektivische Innenansicht des Anschlags 11. Genauer gesagt ist die Innenfläche des Anschlags 11 gezeigt, die der Grundfläche 27 der Führung 8 zugewandt ist. Der Anschlag 11 bildet an seiner Innenfläche einen Vorsprung aus, mit dem das Verbindungselement 7 bei entsprechender Positionierung eine Hinterschneidung ausbildet.

Fig. 3C zeigt eine Perspektivansicht der Führung 8 bzw. die perspektivische Ansicht des Bodens 2 von schräg oben. Dabei ist erkennbar, dass der Anschlag 11 und der Verrastungabschnitt 9 jeweils mit ihrer Außenfläche in einer Ebene liegen und gleichzeitig die Außenfläche des Bodens 2 bzw. des Bodenrands 3 definieren. Die Führung 8 ist in Bezug auf diese Außenfläche des Bodens 2 nach hinten in Richtung hin zur Behälterinnenseite versetzt.

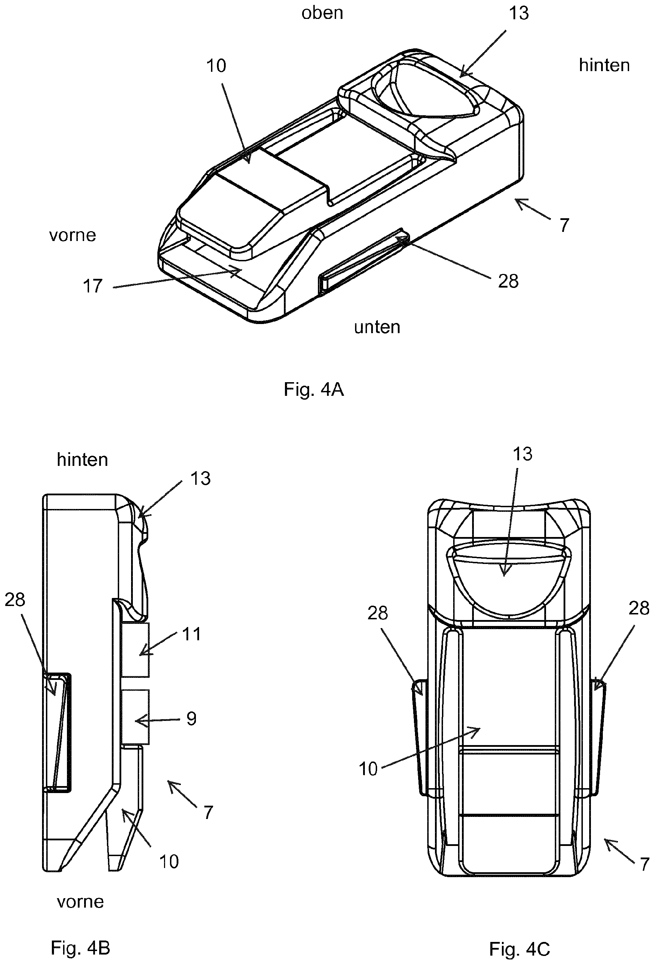

Fig. 4A zeigt die Perspektivansicht eines Verbindungselements 7, welches eine Oberseite und eine Unterseite, sowie eine Vorder- und eine Hinterseite hat (siehe Bezeichnung in Fig.4A). Das Verbindungselement 7 ist in Form eines Schlittens oder Schieberiegels und in dieser Ausführungsform einstückig ausgebildet. Die Grundform des Verbindungselements 7 ist rechteckig. Auf der Oberseite des Verbindungselements 7 befindet sich vorderseitig ein zungenartiger Schnapphaken 10. und hinterseitig ist ein sich direkt an den Schnapphaken 10 anschließender Schiebeabschnitt 13 ausgebildet, der eine kuhlenartige Vertiefung an seiner Oberfläche aufweist, die insbesondere dazu dient, das Verbindungselement 7 in der Führung 8 einfach manuell führen bzw. verschieben zu können. An der Seitenfläche des Verbindungselements 7 ist eine Gleitnase 28 ausgebildet. Die Unterseite des Hakens bzw. Schnapphakens 10 ist von einer Innenfläche 17 des Verbindungselements 7 parallel beabstandet und befindet sich in dieser Position in seiner natürlichen bzw. entspannten Ausrichtung. Der Schnapphaken 10 kann durch Ausüben einer Druckkraft zur Innenfläche 17 des Verbindungselements 7 hin ausgelenkt werden und kehrt nach Beendigung der Druckeinwirkung aufgrund seiner internen Elastizität wieder in seine natürliche Ausrichtung zurück. Die Innenfläche 17 limitiert dabei den Bewegungsradius des Schnapphakens 10 und beugt somit einer Überbeanspruchung vor. An seiner Unterseite weist das Verbindungselement 7 Gleitausnehmungen (nicht dargestellt) auf, die komplementär zur Gleitschiene 30 ausgebildet sind.

In Fig. 4B ist die Seitenansicht des Verbindungselements 7 gezeigt. Das Verbindungselement 7 befindet sich in dem in Fig. 4B gezeigten Zustand zwischen dem Anschlag 11 eines oberen Behälters 1 und dem Verrastungsabschnitt 9 eines unteren Behälters 1. Hierbei wird der Querschnittsverlauf des Schnapphakens 10 deutlich. Der hintere Teil des Schnapphakens 10 wird von der Seitenfläche des Verbindungselements 7 verdeckt, bis der Schnapphaken 10 stufenartig seinen Querschnitt verbreitert, sodass der Haken 10 in Fig. 4B sichtbar wird, und der Querschnitt schließlich zur Vorderseite des Verbindungselements 7 hin abgeschrägt zuläuft. Diese vorderseitige Zuspitzung des Schnapphakens 10 erlaubt ein Unterklemmen bzw. ein selbstbetätigtes Auslenken desselben und somit ein Unterschieben des Verbindungselements 7 unter den Anschlag 11 und/oder den Verrastungsabschnitt 9.

Zur Verwendung des Verbindungselements 7 wird dieses mit dem Schnapphaken 10 voran in das obere Ende der Führung 8 eingesetzt. Das Verbindungselement 7 wird, idealerweise über den Schiebeabschnitt 13, in der Führung 8 nach unten verschoben. Damit das Verbindungselement 7 weder seitlich noch nach vorne aus der Führung 8 rutschen oder fallen kann, nehmen die Gleitausnehmungen am Verbindungselement 7 die Gleitschienen 30 der Führung 8 auf und es greifen die Gleitnasen 28 des Verbindungselements 7 in die Gleitvertiefungen 29 der Führung 8 ein.

In Fig. 4C ist das Verbindungselement 7 in der Vorderansicht gezeigt. Die zwei Gleitnasen 28 erstrecken sich seitlich auf gleicher Höhe weg vom Verbindungselement 7 und laufen von Hinten nach Vorne aufeinander zu.

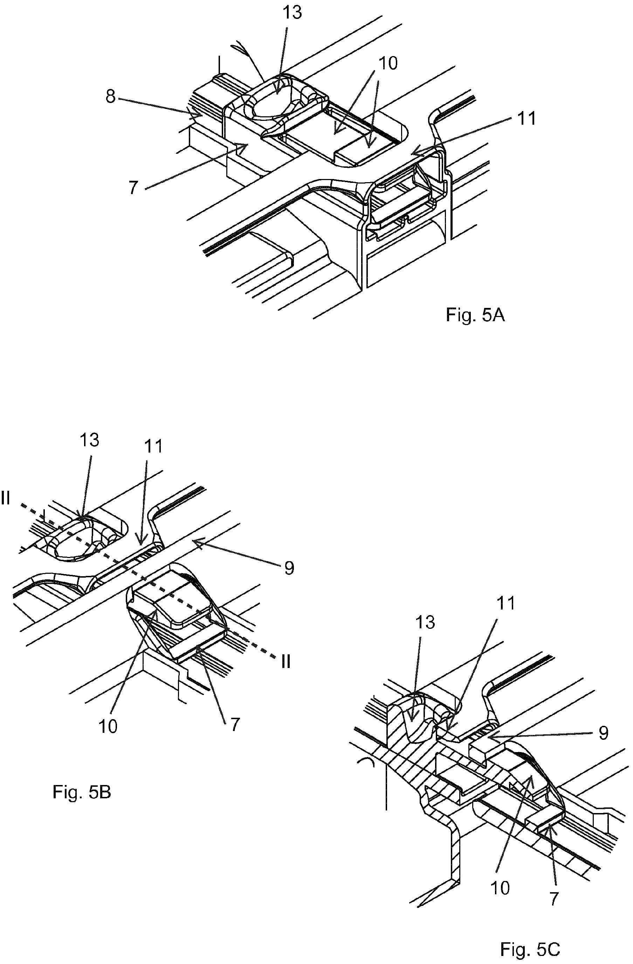

Fig. 5A zeigt den Zustand des Verbindungselementes 7, in dem es sich ausschließlich in der Führung 8 eines oberen Behälters 1 befindet, d.h. vor einem Verbinden zweier Behälter 1. Bei einer Stapelung zweier erfindungsgemäßer Behälter 1 aufeinander setzt die Führung 8 des oberen Behälters 1 die Führung 8 des unteren Behälters 1 fort (vgl. Fig.1). Das heißt, dass die Behälter 1 so übereinander gestapelt werden, dass die Führungen 8 des unteren und oberen Behälters 1 fluchten. Werden nun zwei aufeinander gestapelte erfindungsgemäße Behälter 1 über den Verbindungsmechanismus 5 miteinander verbunden, wird das Verbindungselement 7 in die Führung 8 des oberen Behälters 1 eingesetzt und mithilfe von einer Druckkraftausübung auf den Schiebeabschnitt 13 zum unteren Behälter 1 hin verschoben. Der Schnapphaken 10 passiert dabei zuerst auf Höhe des unteren Endes der Führung 8 den Anschlag 11, der den Schnapphaken 10 mit seiner Innenfläche nach unten drückt (siehe Fig. 5A).

Fig. 5B zeigt den Zustand, in dem das Verbindungselement 7 einen oberen und einen unteren Behälter 1 miteinander verbindet. Ausgehend von Fig. 5A tritt das Verbindungselement 7 durch weiteres (manuelles) Schieben schließlich in die Führung 8 des unteren Behälters 1 ein, sodass es sich hinterseitig in der Führung 8 des oberen Behälters 1 und vorderseitig in der Führung 8 des unteren Behälters 1 befindet. Das Verbindungselement 7 lässt sich dabei maximal so weit nach unten verschieben, bis es mit dem Anschlag 11 und dem Verrastungsabschnitt 9 eine Hinterschneidung ausbildet. In diesem Zustand schlägt der Schiebeabschnitt 13 am Anschlag 11 an, sodass eine weitere Verschiebung nach unten nicht mehr möglich ist. Der Schnapphaken 10 wird in diesem Zustand nicht mehr vom Anschlag 11 oder auch vom Verrastungsabschnitt 9 nach unten gedrückt, sondern befindet sich in seiner natürlichen Ausrichtung, sodass das Verbindungselement 7 auch nicht mehr nach oben verschiebbar ist (siehe Fig. 5B). Nur durch die Ausübung einer Druckkraft auf den Schnapphaken 10 lässt sich dieser aus der Verrastung lösen und das Verbindungselement 7 kann wieder nach oben geschoben werden, um die Verbindung der gestapelten Behälter 1 lösen.

Fig. 5C ist eine Schnittansicht entlang der Linie II-II in Fig. 5B und zeigt die Hinterschneidung des Schnapphakens 10 mit dem Anschlag 11 des oberen Behälters 1 und dem Verrastungsabschnitt 9 des unteren Behälters 1.

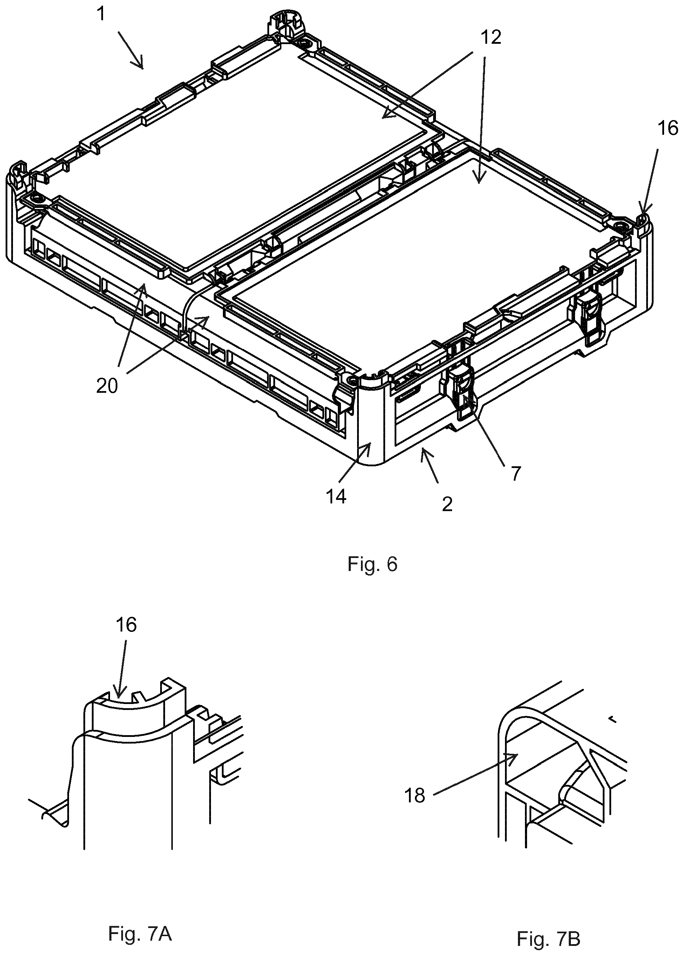

Fig. 6 zeigt einen Behälter 1 im zusammengeklappten Zustand. Der Bodenrand 3 des Bodens 2 ist an beiden Stirnseiten des Behälters 1 ausgebildet, sodass der Boden 2 die zusammengeklappten Stirnwände 4 und Seitenwände 6 dazwischen aufnehmen kann. Die Seitenwände 6 (nicht dargestellt in Fig. 6) befinden sich unterhalb der Stirnwände 4. Die Deckelelemente 12 liegen auf der jeweiligen Stirnwand 4 auf, an der sie verschwenkbar angebracht sind. Es wäre aber auch denkbar, dass die Deckelemente 12 nicht an den Stirnwänden 4, sondern an den Seitenwänden 6 angebracht sind. Je ein Verbindungselement 7 ist in die dafür vorgesehene Führung 8 eingeschoben. Der Stapelvorsprung 16 an jeder der vier Ecken 14 des Bodens 2 erhebt sich über die Oberseite des zusammengeklappten Behälters 1, also auch über die Oberseite der Deckelelemente 12, damit der Behälter 1 auch im zusammengeklappten Zustand stapelbar ist. Die je zwei Eckabschnitte 20 pro Stirnwand 4 sind L-förmig ausgebildet und ragen mit ihrem einen Ende zu den Seitenwänden hin, sodass das eine Ende des Eckabschnittes 20 parallel zu den Seitenwänden 6 ist. In einem aufgebauten Zustand des Behälters 1 (siehe Fig. 1) liegt die Innenfläche des Eckabschnittes 20 auf der Außenfläche der Seitenwand 6 an. Um einen sicheren Behälteraufbau garantieren und die Stirn- und Seitenwände miteinander verbinden zu können, befinden sich an der Innenfläche der Eckabschnitte Rastausnehmungen 22, die mit an der Außenfläche der Seitenwände vorgesehenen Rastnasen (nicht dargestellt) in einen Rasteingriff treten können. In einem zusammengeklappten Zustand des Behälters 1 liegen die Stirnwände 4 mit ihrer seitlichen Kante des Eckabschnitts 20 auf dem Boden 2 auf, sodass die eingeklappten Seitenwände 6 darunter aufgenommen werden können.

Fig. 7A zeigt den Stapelvorsprung 16 der abgerundeten Ecke 14 des Bodens 2 in perspektivischer Ansicht. Der Stapelvorsprung 16 erhebt sich von der oberen Kante der Ecke 14 aus nach oben und ist an der Innenumfangsfläche der Ecke 14 angebracht.

Fig. 7B zeigt die Ecke 14 des Bodens 2 von unten. Dabei ist erkennbar, dass die Ecke 14 des Bodens 2 hohl ist und somit eine Stapelausnehmung 18 ausbildet, die zu, Stapelvorsprung 16 an der oberen Kante der Ecke 14 komplementär ist.

Zusammengefasst kann gesagt werden, dass die vorliegende Erfindung einen stapelbaren Behälter betrifft, der einen Boden, zwei gegenüberliegende Seitenwände und zwei gegenüberliegende Stirnwände sowie einen Verbindungsmechanismus zum Verbinden zweier baugleicher aufeinander gestapelter Behälter aufweist. Der Verbindungsmechanismus weist ein Verbindungselement auf, das separat und/oder unabhängig vom Behälter ausgebildet ist und in einer Führung, insbesondere am Boden, des Behälters verschiebbar bzw. gleitbar beweglich ist, und mit einem integralen Schnapphaken versehen ist, der mit einem dafür am Behälter bzw. am Boden des Behälters vorgesehenen Verrastungsabschnitt, der insbesondere in Form einer Leiste ausgebildet ist, schnappartig reversibel verrastbar ist. Weiterhin betrifft die vorliegende Erfindung ein System aus zumindest zwei stapelbaren Behältern sowie eine Verwendung eines Verbindungselementes, das zur Verbindung der erfindungsgemäßen stapelbaren Behälter beiträgt.

### Liste der Bezugszeichen

- 1: Behälter
- 2: Boden
- 3: Bodenrand
- 4: Stirnwand/Stirnwandpaar
- 5: Verbindungsmechanismus
- 6: Seitenwand/Seitenwandpaar
- 7: Verbindungselement
- 8: Führung
- 9: Verrastungsabschnitt
- 10: Schnapphaken
- 11: Anschlag
- 12: Deckelelement
- 13: Schiebeabschnitt
- 14: Ecke
- 16: Stapelvorsprung
- 17: Innenfläche (des Verbindungselements 7)
- 18: Stapelausnehmung
- 20: Eckabschnitt
- 22: Rastausnehmung
- 24.1/2: Stapelgeometrie
- 26: griffartige Ausnehmung
- 27: Grundfläche
- 28: Gleitnase
- 29: Gleitvertiefung
- 30: Gleitschiene

## Patentansprüche

1. Stapelbarer Behälter (1) mit:
einem Boden (2);
einem Stirnwandpaar (4);
einem Seitenwandpaar (6); und
einem Verbindungsmechanismus (5) zum Verbinden übereinander gestapelter, baugleicher oder kompatibler Behälter (1),
wobei der Verbindungsmechanismus (5) ein separat von dem Behälter (1) ausgebildetes Verbindungselement (7) aufweist, das in eine am Behälter (1), insbesondere an einem Seitenrand des Bodens, vorgesehene Führung (8) einsetzbar und darin verschiebbar sowie festlegbar ist und einen, insbesondere integralen, Schnapphaken (10) aufweist, der mit einem an einem baugleichen oder kompatiblen Behälter (1) ausgebildeten und dafür vorgesehenen Verrastungsabschnitt (9) in Eingriff bringbar ist, **dadurch gekennzeichnet, dass** die Führung (8) als Nut ausgebildet ist, die in einer Außenfläche des Behälters (1) über die gesamte Bodenhöhe senkrecht zum Boden (2) verläuft und die parallel zu ihrer Längsrichtung an beiden Seiten zumindest eine Gleitvertiefung (29) und/oder auf ihrer Grundfläche (27) zumindest eine Gleitschiene (30) zur Führung (8) des Verbindungselements (7) aufweist.

2. Behälter (1) nach Anspruch 1, wobei
der Verbindungsmechanismus (5) behälterseitig einen Anschlag (11) ausbildet, der die Verschiebbarkeit des Verbindungselements (7) in der Führung (8) zum Verrastungsabschnitt (9) eines unteren baugleichen Behälters (1) hin begrenzt.

3. Behälter (1) nach Anspruch 2, wobei
der Verrastungsabschnitt (9), der Anschlag (11) und das Verbindungselement (7) derart konstruktiv aufeinander abgestimmt sind, dass durch den Verbindungsmechanismus (5) beim Verbinden zweier übereinandergestapelter baugleicher Behälter (1) ein spielfreier Eingriff entsteht.

4. Behälter (1) nach einem der vorangegangenen Ansprüche, wobei
beide Stirnwände (4) und beide Seitenwände (6) mit ihrer Unterseite über ein Gelenk oder Scharnier klappbar mit dem Boden (2) verbunden sind, sodass
der Behälter (1) von einem aufgebauten Zustand, in dem sich das Seitenwandpaar (6) und das Stirnwandpaar (4) vom Boden (2) aus senkrecht erstrecken und somit eine umlaufende Seitenwandung des Behälter (1) ausbilden, in einen zusammengengeklappten Zustand überführbar ist, in dem das Seitenwandpaar (6) und das Stirnwandpaar (4) zum Boden (2) hin eingeklappt sind.

5. Behälter (1) nach Anspruch 4, wobei
die Stirnwände (4) an ihrer Oberseite je ein Deckelelement (12) zum Verschließen des Behälters (1) aufweisen, das verschwenkbar mit den Stirnwänden (4) verbunden ist und in einem zusammengeklappten Zustand des Behälters (1) auf die jeweilige Stirnwand (4) auflegbar ist.

6. Behälter (1) nach einem der Ansprüche 4 oder 5, wobei
der Boden (2) an seinen Ecken (14) oberseitig Stapelvorsprünge (16) und unterseitig komplementär dazu ausgebildete Stapelausnehmungen (18) aufweist, die bei einer Stapelung zweier baugleicher Behälter (1), von denen sich zumindest der Untere im zusammengeklappten Zustand befindet, zusammenwirken.

7. Behälter (1) nach einem der Ansprüche 4 bis 6, wobei
zwei gegenüberliegende Behälterwände seitlich jeweils L-förmige Eckabschnitte (20) aufweisen, die endseitig in Richtung der anderen Behälterwände ragen und Rastausnehmungen (22) aufweisen, die in einem aufgebauten Zustand des Behälters (1) seitlich vorgesehene Rasthaken der anderen Behälterwände aufnehmen.

8. Behälter (1) nach einem der vorangegangenen Ansprüche, wobei
der Boden (2) unterseitig eine Stapelgeometrie (24.1) aufweist, die bei einer Stapelung zweier baugleicher Behälter (1) mit einer komplementären Stapelgeometrie (24.2) an der Oberseite von zumindest einer Behälterwand zusammenwirkt.

9. Behälter (1) nach Anspruch 2 und Anspruch 8, wobei
die Stapelgeometrie (24.1) auf Höhe der Führung (8) ausgebildet ist und zugleich den Anschlag (11) bildet.

10. Behälter (1) nach einem der vorangegangenen Ansprüche, wobei
zwei gegenüberliegende Behälterwände an ihrer Außenfläche griffartige Ausnehmungen (26) aufweisen.

11. Behälter (1) nach einem der vorangegangenen Ansprüche, wobei
der Boden (2) an zumindest zwei gegenüberliegenden Seiten einen Bodenrand (3) aufweist, der die zumindest eine Führung (8), vorzugsweise zwei Führungen (8), aufweist, die insbesondere über die gesamte Höhe des Bodenrands (3) ausgebildet sind.

12. Behältersystem mit zumindest zwei verbindbaren Behältern (1) nach einem der Ansprüche 1 bis 11.

13. Verwendung eines Verbindungselementes (7) zum Verbinden von zwei übereinander gestapelten Behältern (1) nach einem der Ansprüche 1 bis 11, wobei
das Verbindungselement (7) konfiguriert ist, in die Führung (8) einsetzbar und darin verschiebbar sowie festlegbar zu sein, und
ferner konfiguriert ist, über einen, insbesondere damit integral ausgebildeten, Schnapphaken (10) mit dem Verrastungsabschnitt (9), insbesondere spielfrei, in Eingriff bringbar zu sein.

14. Verwendung eines Verbindungselementes (7) nach Anspruch 13, wobei
das Verbindungselement (7) mit einer rechteckigen Grundform ausgebildet ist, ein T-förmiges Querschnittprofil hat und an seiner Oberseite vorderseitig den Schnapphaken (10) und hinterseitig einen Schiebeabschnitt (13), der dazu dient, das Verbindungselement (7) manuell führen zu können, aufweist, wobei vorzugsweise der Schiebeabschnitt (13) als Vorsprung ausgebildet ist, der an einen Anschlag (11) des Behälters (1) anschlägt, wobei
das T-Profil des Verbindungselementes (7) so ausgebildet ist, dass es mit einem T-Profil der Führung (8) zusammenwirkt.

## Claims

1. Stackable container (1) with:
a bottom (2);
a front wall pair (4);
a side wall pair (6); and
a connection mechanism (5) for connecting identically constructed or compatible containers (1) stacked on top of each other,
wherein
the connection mechanism (5) has a connection element (7) which is formed separately from the container (1) and which can be inserted into a guide (8) provided on the container (1), in particular on a side edge of the bottom, and which can be displaced and fixed therein and which has a, in particular integral, snap-fit (10) which can be brought into engagement with a latching portion (9) formed on an identically constructed or compatible container (1) and provided for this purpose, **characterized in that** the guide (8) is designed as a groove which runs in an outer surface of the container (1) over the entire bottom height perpendicular to the bottom (2) and which has at least one sliding recess (29) on both sides parallel to its longitudinal direction and/or at least one sliding rail (30) on its base surface (27) to the guide (8) of the connection element (7).

2. Container (1) according to claim 1, wherein
the connection mechanism (5) forms a stop (11) on the container side, which limits the displaceability of the connection element (7) in the guide (8) towards the latching portion (9) of a lower, identically constructed container (1).

3. Container (1) according to claim 2, wherein
the latching portion (9), the stop (11) and the connection element (7) are constructively coordinated with each other such that the connection mechanism (5) creates a clearance-free engagement when two identically constructed containers (1) stacked on top of each other are connected.

4. Container (1) according to one of the preceding claims, wherein
both front walls (4) and both side walls (6) are connected to the bottom (2) with their underside via a joint or hinge, so that
the container (1) can be transferred from an assembled state, in which the side wall pair (6) and the front wall pair (4) extend perpendicularly from the bottom (2) and thus form a circumferential side wall of the container (1), to a folded state, in which the side wall pair (6) and the front wall pair (4) are folded in towards the bottom (2).

5. Container (1) according to claim 4, wherein
the front walls (4) each have on their upper side a lid element (12) for closing the container (1), which is pivotably connected to the front walls (4) and can be placed on the respective front wall (4) in a folded state of the container (1).

6. Container (1) according to one of claims 4 or 5, wherein
the bottom (2) has stacking projections (16) at its corners (14) on the top side and stacking recesses (18) on the bottom side which are designed to be complementary thereto and which interact when two identically constructed containers (1) are stacked, of which at least the lower one is in the folded state.

7. Container (1) according to one of claims 4 to 6, wherein
two opposite container walls each have L-shaped corner portions (20) at the sides, which project at the ends in the direction of the other container walls and have locking recesses (22) which, when the container (1) is assembled, receive laterally provided locking hooks of the other container walls.

8. Container (1) according to one of the preceding claims, wherein
the bottom (2) has a stacking geometry (24.1) on its lower side which, when two identically constructed containers (1) are stacked, interacts with a complementary stacking geometry (24.2) on the upper side of at least one container wall.

9. Container (1) according to claim 2 and claim 8, wherein
the stacking geometry (24.1) is formed at the level of the guide (8) and also forms the stop (11).

10. Container (1) according to one of the preceding claims, wherein
two opposite container walls have handle-like recesses (26) on their outer surface.

11. Container (1) according to one of the preceding claims, wherein
the bottom (2) has a bottom edge (3) on at least two opposite sides, said bottom edge (3) having the at least one guide (8), preferably two guides (8), which are formed in particular over the entire height of the bottom edge (3).

12. Container system with at least two connectable containers (1) according to one of claims 1 to 11.

13. Use of a connection element (7) for connecting two containers (1) stacked on top of each other according to one of claims 1 to 11, wherein
the connection element (7) is configured to be insertable into the guide (8) and to be movable and fixable therein, and
is further configured to be engageable with the latching portion (9), in particular without play, via a snap-fit (10) which is in particular integrally formed therewith.

14. Use of a connection element (7) according to claim 13, wherein
the connection element (7) is formed with a rectangular basic shape, has a T-shaped cross-sectional profile and has the snap-fit (10) at the front on its upper side and a sliding section (13) at the rear side, which serves to be able to guide the connection element (7) manually, wherein preferably the sliding section (13) is formed as a projection which abuts against a stop (11) of the container (1), wherein
the T-profile of the connection element (7) is designed to interact with a T-profile of the guide (8).

## Revendications

1. Récipient empilable (1) avec :
un fond (2) ;
une paire de parois avant (4) ;
une paire de parois latérales (6) ; et
un mécanisme de connexion (5) pour connecter des récipients (1) empilés les uns sur les autres et de construction identique ou compatible, dans lequel le mécanisme de connexion (5) présente un élément de connexion (7) formé séparément du récipient (1), qui peut être inséré dans un guidage (8) prévu sur le récipient (1), en particulier sur un bord latéral du fond, et qui peut y être déplacé et fixé et présente un crochet d'encliquetage (10), en particulier un crochet d'encliquetage d'un seul tenant, qui peut être mis en prise avec une section d'encliquetage (9) formée sur un récipient (1) de construction identique ou compatible et prévue à cet effet, **caractérisé en ce que** le guidage (8) est formé en tant que rainure qui s'étend dans une surface extérieure du récipient (1) sur toute la hauteur de fond perpendiculairement au fond (2) et qui présente au moins un évidement de glissement (29) des deux côtés parallèlement à sa direction longitudinale et/ou au moins un rail de glissement (30) sur sa surface de fond (27) pour le guidage (8) de l'élément de connexion (7).

2. Récipient (1) selon la revendication 1, dans lequel
le mécanisme de connexion (5) forme une butée (11) côté récipient, qui limite la capacité de déplacement de l'élément de connexion (7) dans le guidage (8) vers la section d'encliquetage (9) d'un récipient inférieur (1) de construction identique.

3. Récipient (1) selon la revendication 2, dans lequel
la section d'encliquetage (9), la butée (11) et l'élément de connexion (7) sont adaptés les uns aux autres de sorte que le mécanisme de connexion (5) produit un engagement sans jeu lorsque deux récipients (1) de construction identique sont empilés l'un sur l'autre.

4. Récipient (1) selon l'une quelconque des revendications précédentes, dans lequel
les deux parois avant (4) et les deux parois latérales (6) sont connectées au fond (2) par leur face inférieure au moyen d'une articulation ou d'une charnière, de sorte que
le récipient (1) peut être transféré d'un état assemblé, dans lequel la paire de parois latérales (6) et la paire de parois avant (4) s'étendent verticalement à partir du fond (2) et forment ainsi une paroi latérale circonférentielle du récipient (1) dans un état replié, dans lequel la paire de parois latérales (6) et la paire de parois avant (4) sont repliées vers le fond (2).

5. Récipient (1) selon la revendication 4, dans lequel
les parois avant (4) présentent chacune sur leur face supérieure un élément de couvercle (12) pour la fermeture du récipient (1), qui est relié de manière pivotante aux parois avant (4) et peut être placé sur la paroi avant respective (4) lorsque le récipient (1) est à l'état replié.

6. Récipient (1) selon l'une quelconque des revendications 4 ou 5, dans lequel
le fond (2) présente des saillies d'empilage (16) à ses coins (14) sur la face supérieure et des évidements d'empilage (18) formés sur la face inférieure de manière complémentaire à celle-ci, qui coopèrent lorsque deux récipients (1) de construction identique sont empilés, dont au moins le récipient inférieur est à l'état replié.

7. Récipient (1) selon l'une quelconque des revendications 4 à 6, dans lequel
deux parois de récipient opposées présentent chacune des sections d'angle (20) en forme de L latéralement, qui font saillie aux extrémités en direction des autres parois de récipient et présentent des évidements d'encliquetage (22) qui, lorsque le récipient (1) est assemblé, reçoivent les crochets prévus latéralement des autres parois de récipient.

8. Récipient (1) selon l'une quelconque des revendications précédentes, dans lequel
le fond (2) présente une géométrie d'empilage (24.1) sur la face inférieure qui, lorsque deux récipients (1) de construction identique sont empilés, coopère avec une géométrie d'empilage complémentaire (24.2) sur la face supérieure d'au moins une paroi de récipient.

9. Récipient (1) selon la revendication 2 et la revendication 8, dans lequel
la géométrie d'empilage (24.1) est formée à hauteur du guidage (8) et forme en même temps la butée (11).

10. Récipient (1) selon l'une quelconque des revendications précédentes, dans lequel
deux parois de récipient opposées présentent des évidements (26) en forme de poignée sur leur surface extérieure.

11. Récipient (1) selon l'une quelconque des revendications précédentes, dans lequel
le fond (2) présente un bord de fond (3) sur au moins deux côtés opposés, qui comporte au moins un guidage (8), de préférence deux guidages (8), qui sont formés en particulier sur toute la hauteur du bord de fond (3).

12. Système de récipient avec au moins deux récipients (1) pouvant être connectés entre eux selon l'une quelconque des revendications 1 à 11.

13. Utilisation d'un élément de connexion (7) pour connecter deux récipients (1) empilés l'un sur l'autre selon l'une quelconque des revendications 1 à 11, dans laquelle
l'élément de connexion (7) est configuré pour pouvoir être inséré dans le guidage (8) et pour pouvoir y être déplacé et fixé, et
est en outre configuré pour pouvoir être mis en prise avec la section d'encliquetage (9), en particulier sans jeu, par l'intermédiaire d'un crochet d'encliquetage (10), en particulier formé d'un seul tenant avec celui-ci.

14. Utilisation d'un élément de connexion (7) selon la revendication 13, dans laquelle
l'élément de connexion (7) est formé avec une forme de base rectangulaire, a une section transversale en forme de T et présente le crochet d'encliquetage (10) sur sa face supérieure à l'avant et une section coulissante (13) sur sa face arrière, qui sert à pouvoir guider manuellement l'élément de connexion (7), dans lequel la section coulissante (13) est de préférence formée en tant que saillie qui bute contre une butée (11) du récipient (1), dans lequel
le profil en forme de T de l'élément de connexion (7) est conçu pour coopérer avec un profil en forme de T du guidage (8).
